# FASCICULE DE BREVET EUROPEEN

(11) **EP 2 641 791 B1**
(45) Date de publication et mention de la délivrance du brevet: **01.04.2015**
(21) Numéro de dépôt: 13156826.3
(22) Date de dépôt: 26.02.2013
(51) Int. Cl.: B60T 8/17, B60T 8/88, B60T 13/74, B64C 25/42

(54) **Système de freinage électromécanique pour aéronef.**
Elektromechanisches Bremssystem für Luftfahrzeug
An electromechanical braking system for an aircraft.

(30) Priorité: 21.03.2012 FR 1252541
(43) Date de publication de la demande: 25.09.2013
(73) Titulaire: Messier-Bugatti-Dowty, 78140 Vélizy-Villacoublay (FR)
(72) Inventeur: Frank, David, 78140 VELIZY-VILLACOUBLAY (FR)
(74) Mandataire: Parzy, Benjamin Alain

(56) Documents cités:
- EP-A1- 1 681 220
- GB-A- 2 470 251

## Description

L'invention est relative à un système de freinage électromécanique pour aéronef.

### ARRIERE-PLAN TECHNOLOGIQUE DE L'INVENTION

On connaît des architectures de système de freinage pour aéronef comportant :
- des freins à actionneurs électromécaniques pour appliquer sélectivement un effort de freinage sur des piles de disques respectives pour exercer un couple de freinage sur des roues respectives ;
- au moins un module de puissance pour envoyer aux actionneurs électromécaniques des courants de phase afin que ceux-ci exercent un effort de freinage ;
- au moins un module de commande pour commander le module de puissance en réponse à des consignes de freinage de sorte que des courants de phase appropriés soient envoyés aux actionneurs pour que ceux-ci développent l'effort de freinage désiré;
- au moins un boîtier d'alimentation, comportant des moyens de génération d'une haute tension à partir d'un bus de puissance électrique de l'aéronef et/ou d'une batterie de l'aéronef, pour fournir au module de puissance la haute puissance nécessaire à l'alimentation des actionneurs.

En général, le module de commande et le module de puissance sont regroupés dans un contrôleur appelé EMAC (pour Electro Mechanical Actuator Controler). l'EMAC intègre généralement la commande d'un organe de verrouillage de l'actionneur électromécanique en position, qui sert à assurer le freinage de parc, et qui ne nécessite que de la basse tension pour être actionné.

Le boîtier d'alimentation comporte en général un ou des convertisseurs (par exemple des transformateurs) aptes à transformer la puissance fournie par le bus de puissance de l'aéronef ou la batterie de celui-ci en une puissance de haute tension calibrée pour répondre aux appels de forte puissance générés par le module de puissance de l'EMAC.

Les commandes délivrées par le module de commande à destination du module de puissance sont élaborées à partir de diverses consignes de freinage venant en particulier d'un calculateur de freinage assurant la fonction autobrake et mettant en oeuvre une protection d'antiglissement, de pédales de frein ou d'un sélecteur de parc.

L'ensemble du système de freinage de l'aéronef est généralement prévu pour fonctionner en trois modes: un mode normal, un mode d'urgence, et un mode de parc.

Dans le mode normal, le module de commande génère une commande à destination du module de puissance en fonction d'une consigne numérique de freinage reçue du calculateur de freinage.

Dans le mode d'urgence, dans lequel le calculateur de freinage est défaillant, le module de commande génère une commande à destination du module de puissance en fonction d'une consigne analogique de freinage, en l'occurrence de signaux de pédale représentatifs de l'enfoncement des pédales de frein actionnées directement par le pilote.

Dans le mode de parc, prioritaire par rapport aux autres modes, le module de commande génère une commande de parc en réponse à une consigne discrète de parc émis lors de l'actionnement du sélecteur de parc par le pilote. Pour permettre un maintien du freinage de parc alors que l'aéronef est à l'arrêt, les actionneurs sont équipés d'un frein à manque de courant qui, lorsqu'il n'est pas alimenté, bloque le poussoir en position.

Un système de freinage complet pour un aéronef à quatre roues freinées est par exemple illustré dans le document US6296325.

L'alimentation en forte puissance des EMACs est assurée par des boîtiers d'alimentation fournissant une puissance haute tension HVDC. Les boîtiers d'alimentation sont de préférence équipés d'un interrupteur de puissance qui est commandé en fonction des consignes de freinage afin de placer l'interrupteur dans un état passant uniquement si un freinage est effectivement requis, comme cela est connu du document FR2857642.

Dans ce type d'architecture, les EMACs reçoivent des consignes numériques de freinage en provenance de calculateurs de freinage. Certains au moins des EMACs reçoivent également des signaux analogiques ou discrets en provenance des pédales ou d'un sélecteur de parc. La consigne numérique correspond au freinage normal, tandis que les signaux analogiques ou discrets permettent le freinage secours ou le freinage de parc.

### OBJET DE L'INVENTION

L'invention vise à proposer un système de freinage pour aéronef simplifié.

### BREVE DESCRIPTION DE L'INVENTION

On propose un système de freinage d'aéronef comportant :
- des freins à actionneurs électromécaniques de freinage adaptés à presser sélectivement des piles de disques associées pour générer un couple de freinage sur des roues associées de l'aéronef,
- au moins un module de commande recevant des consignes de freinage et générant en réponse une commande de freinage ;
- au moins un module de puissance délivrant en réponse à la commande de freinage des courants de phase aux moteurs des actionneurs connectés au module de puissance pour que ceux-ci développent un effort de freinage correspondant aux consignes de freinage.

Selon l'invention, le module de commande comporte :
- un étage de traitement numérique comportant au moins une unité de traitement numérique pour mettre en oeuvre des lois complexes de commande des actionneurs pour générer une première commande de freinage en réponse à des consignes numériques de freinage ;
- un étage de traitement analogique comportant au moins un circuit logique programmable pour au moins :
   - recevoir et conditionner les consignes numériques de freinage provenant d'au moins un bus de communication numérique pour les envoyer à l'étage de traitement numérique afin que celui-ci génère la première commande de freinage ;
   - recevoir et conditionner des consignes analogiques ou discrètes de freinage ;
   - mettre en oeuvre des lois simples de commande des actionneurs pour générer une deuxième commande de freinage en réponse aux consignes analogiques ou discrètes de freinage ;
   - sélectionner l'une des première ou deuxième commandes de freinage en réponse à un ordre de sélection externe pour l'envoyer au module de puissance.

Ainsi, l'étage de traitement numérique permet de mettre en oeuvre des lois complexes de freinage incluant une protection d'anti-glissement pour générer une première commande en réponse à un consigne de freinage numérique émis par un calculateur de freinage. C'est le mode de freinage normal.

Quant à l'étage de traitement analogique, il permet tout à la fois de conditionner les diverses consignes de freinage, et de générer une deuxième commande selon des lois simplifiées, qui permettent néanmoins, en cas de perte des calculateurs de freinage, de garder une certaine capacité à freiner. On peut ainsi continuer, grâce aux dispositions de l'invention, d'assurer un freinage secours à l'aide des seules pédales, mais en conservant une capacité de freinage différentiel pouvant aider à diriger l'aéronef au sol.

La sélection de l'une ou l'autre des commandes se fait soit automatiquement par envoi d'un ordre de sélection par le calculateur de freinage privilégiant la première commande tant que les calculateurs sont valides, et commutant sur la deuxième commande dès qu'une défaillance des calculateurs est identifiée. Cette sélection peut encore se faire manuellement par le pilote.

Par loi de commande simple, il faut entendre des lois de commande pouvant être mises en oeuvre par un circuit logique programmable. Ces lois n'intègrent pas de protection anti-glissement ou anti-blocage. A la limite, lesdites lois de commandes se résument à une simple recopie des signaux analogiques de pédales ou du signal discret de sélecteur de parc.

Par loi complexe, on entend des lois mettant en oeuvre en particulier des protections d'antiglissement ou d'antiblocage. A cet effet, les unités de traitement numériques reçoivent des informations de vitesse de rotation des roues vis les réseaux numériques 6. Ce type de traitement nécessite une grande vitesse de calcul, et met en oeuvre des stratégies élaborées pour relâcher l'effort de freinage généré par les actionneurs si la roue associée part au blocage.

Dans un premier agencement du système de freinage de l'invention, le module de commande et le module de puissance sont regroupés en un même équipement, appelé contrôleur ou EMAC.

Dans un deuxième agencement du système de freinage de l'invention, l'étage de traitement analogique comporte aux moins deux sous-étages ou cartes, dont un premier intégré dans le boîtier d'alimentation et un deuxième intégré avec le module de puissance dans un contrôleur ou EMAC, le premier sous-étage assurant l'acquisition des signaux analogiques et discrets, la commande de l'interrupteur de puissance, la mise en oeuvre des lois simples de commande pour l'élaboration de la deuxième commande à destination du module de puissance, tandis que le deuxième sous-étage assure l'acquisition et le conditionnement des consignes numériques de freinage, la réception de la deuxième commande, et la sélection entre la première commande élaborée par l'étage numérique et la deuxième commande.

Dans un troisième agencement du système de freinage de l'invention, le module de commande est séparé du module de puissance et est intégré dans le boîtier d'alimentation. Le contrôleur ou EMAC est alors réduit au module de puissance, qui peut être disposé au plus près des atterrisseurs portant les roues freinées. Ainsi, la seule liaison d'information entre le boîtier d'alimentation et le module de puissance se réduit à la liaison permettant d'envoyer la commande du module de puissance.

### BREVE DESCRIPTION DES FIGURES

L'invention sera mieux comprise à la lumière de la description qui suit de modes particuliers de réalisation de l'invention, en référence aux figures des dessins annexés, parmi lesquels :
- la figure 1 est un schéma d'une architecture de système de freinage selon un premier mode particulier de mise en oeuvre de l'invention, en application à un aéronef à quatre roues freinées ;
- la figure 2 est un agrandissement du schéma de la figure 1 montrant en particulier un boîtier d'alimentation et un EMAC raccordés ;
- la figure 3 est une figure analogue à la figure 2 d'une variante de réalisation de l'invention ;
- la figure 4 est une figure analogue à la figure 2 d'une variante de réalisation de l'invention.

### DESCRIPTION DETAILLEE DE MODES DE REALISATION DE L'INVENTION

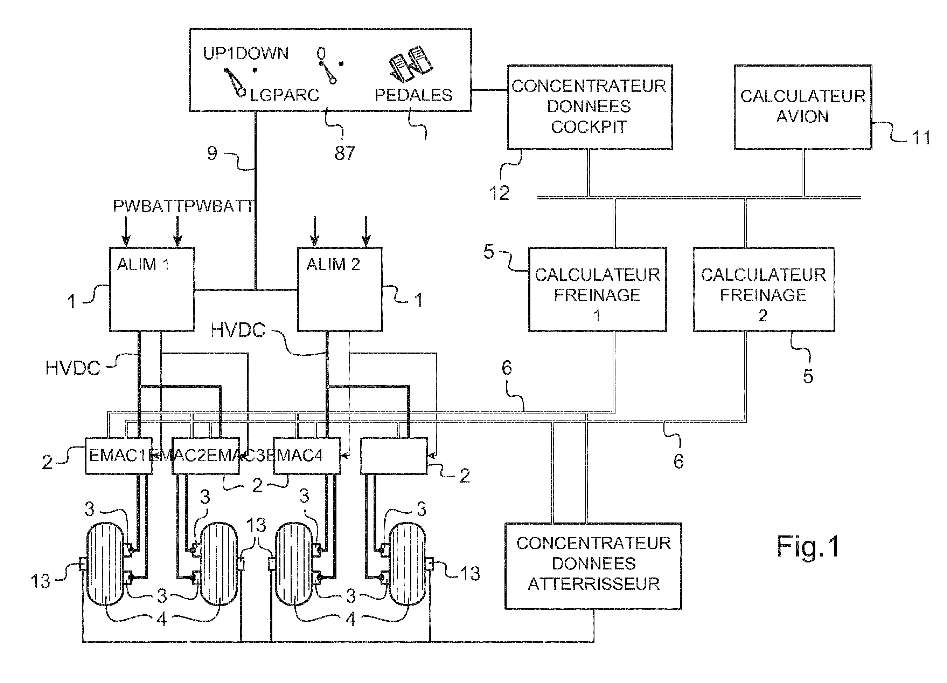

L'invention est tout d'abord décrite en référence à la figure 1. Sur cette figure, on distingue des flux de forte puissance en traits gras, et des flux d'information en traits fins, simples pour les flux analogiques ou discrets, et doubles pour les flux numériques.

Concernant la forte puissance, le système de freinage de l'invention comporte des boîtiers d'alimentation 1 adaptés à générer une forte puissance HVDC à partir des sources de puissance de l'aéronef, par exemple le réseau 270VAC appelé ici PW ou la batterie BATT.

La forte puissance HVDC est fournie à des contrôleurs ou EMAC 2, comportant comme cela sera détaillé plus loin un module de puissance intégrant au moins un onduleur pour générer à partir de la puissance HVDC ainsi fournie des courants de phase pour des moteurs d'actionneurs électromécaniques 3 de freinage équipant des freins associés aux roues freinées 4 de l'aéronef.

La commande du module de puissance est assurée par un module de commande, pouvant être intégré dans l'EMAC, ou dans le boîtier d'alimentation, ou encore partagé entre les deux, comme cela sera décrit plus loin, et qui reçoit pour ce faire des consignes numériques de freinage numérique en provenance de calculateurs de freinage 5 et véhiculés par des bus de données numériques 6, ainsi que des signaux analogiques ou discrets provenant de pédales de frein 7 ou d'un sélecteur de parc 8 et amenés par voie analogique 9.

Pour élaborer les consignes numériques de freinage, les calculateurs de freinage 5 sont reliés par un bus de données 10 de l'aéronef à au moins un calculateur de l'aéronef 11 fournissant des données telles que la vitesse de l'aéronef, le fait que l'aéronef soit au sol ou non. Les calculateurs de freinage 5 reçoivent également les signaux analogiques de pédale 7 ou de sélecteur de parc 8 qui sont ici à cette fin collectés et numérisés par un concentrateur de données cockpit 12, ainsi que des signaux provenant de tachymètres 13 disposés dans les roues freinés et dont les signaux sont ici également collectés et numérisés par des concentrateurs de données atterrisseur 14. L'utilisation de concentrateurs de données n'est cependant pas obligatoire dans le cadre de l'invention.

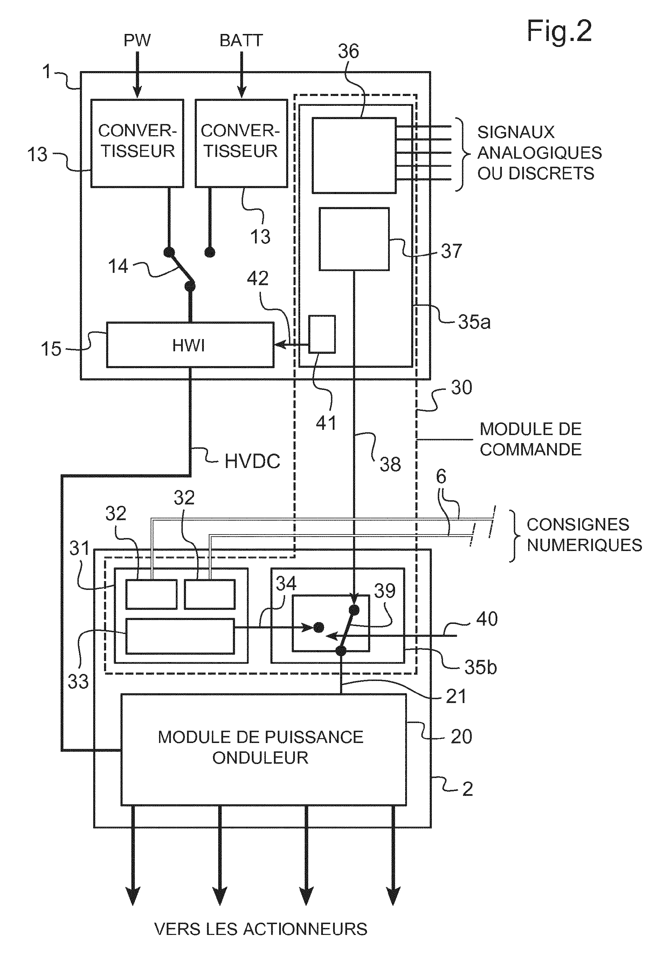

La façon dont ces différents signaux sont utilisés pour commander le freinage est maintenant détaillée en référence à un premier mode particulier de réalisation illustré à la figure 2.

Chaque boîtier d'alimentation 1 comporte des convertisseurs 13 pour convertir un courant provenant d'un bus de puissance de l'aéronef ou de la batterie de celui-ci en un signal de haute puissance à tension constante HVDC. Un commutateur de puissance 14 permet de sélectionner la source de puissance. Le boîtier d'alimentation 1 est pourvu d'un interrupteur de puissance commandé 15 permettant de couper l'alimentation des EMACs, et de ne l'autoriser que dans le cas où un freinage est effectivement demandé, ce qui évite tout freinage intempestif.

La haute puissance HVDC est transmise à un module de puissance 20 intégré dans l'EMAC 2. Le module de puissance 20 comporte essentiellement des onduleurs adaptés à générer des courants de phase à destination des moteurs des actionneurs électromécaniques de freinage. Le module de puissance 20 est commandé grâce à une commande de freinage 21 qui est élaboré par un module de commande 30.

Dans le mode de réalisation représenté, le module de commande 30 est entouré par des pointillés, et est ici intégralement contenu dans l'EMAC 2. l'EMAC 2,

Le module de commande 30 comporte un étage numérique 31 qui comporte des moyens de connexion 32 aux bus numériques 6 amenant les consignes numériques de freinage élaborées par les calculateurs de freinage 5, ainsi qu'une unité de traitement numérique 33 (par exemple un processeur ou CPU associé à des mémoires) mettant en oeuvre des lois complexes pour élaborer une première commande de freinage 34.

Le module de commande 30 comporte par ailleurs un étage analogique 35, qui comporte des moyens d'entrée sortie 36 pour recevoir des signaux analogiques ou discrets en provenance par exemple des pédales ou du sélecteur de parc. L'étage analogique 35 comporte également au moins un circuit logique programmable 37 pour conditionner lesdits signaux et en déduire une deuxième commande 38 du module de puissance 20 en mettant en oeuvre des lois de freinage simples pouvant être mises en oeuvre à l'aide de portes logiques.

Par lois simples, on entend des lois pouvant être mises en oeuvre par un circuit logique programmable. Par exemple, si l'étage analogique reçoit des signaux en provenance des pédales, le circuit logique sera programmé pour générer une consigne de freinage comportant des composantes proportionnelles auxdits signaux, et qui pourront être exploités pour effectuer un freinage différentiel. Ainsi, on obtient un mode de freinage secours intéressant, dans lequel le pilote peut doser le freinage par appui sur les pédales, peut également effectuer un freinage différentiel pour aider à diriger l'aéronef par appui différentiel sur les pédales. Le pilote ne bénéficie toutefois pas d'une protection d'antiglissement ou d'antiblocage.

Par ailleurs, le circuit logique programmable peut également, sur réception d'un signal discret provenant du sélecteur de parc, enclencher une procédure de freinage de parc, par lequel on commence par déverrouiller les poussoirs des actionneurs, commander ceux-ci pour qu'ils appliquent un effort de parc, et enfin verrouiller les actionneurs en position.

Pour commander l'interrupteur de puissance 15 de boîtier d'alimentation 1, il est nécessaire de prévoir dans le boîtier d'alimentation 1 une carte analogique 50 comportant des moyens d'entrée/sortie 56 pour recevoir les signaux analogiques ou discrets afin de commander l'interrupteur de puissance 15 au moyen par exemple d'un circuit logique programmable 41.

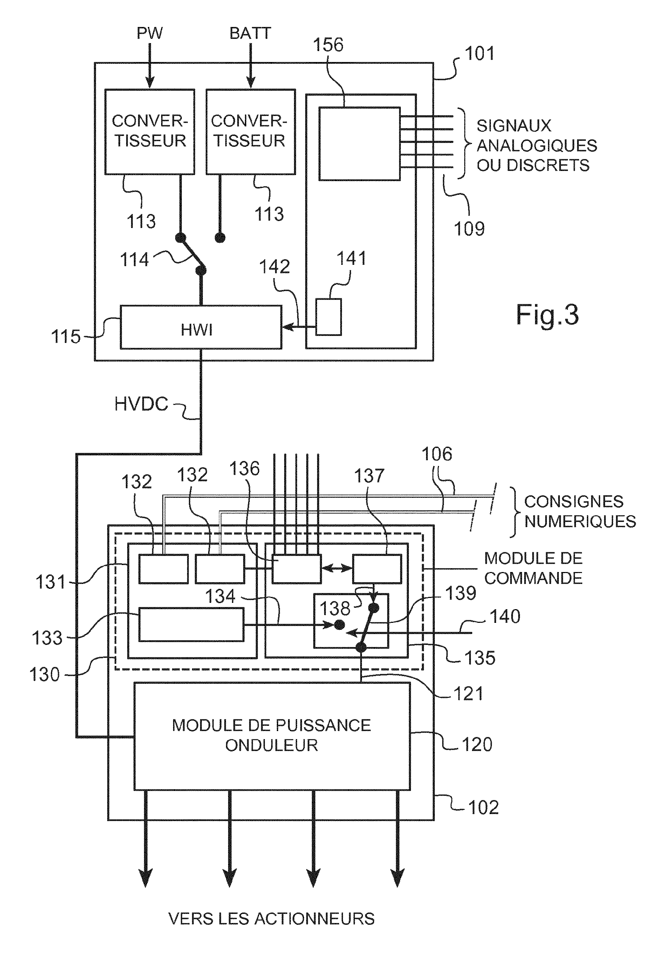

Selon un deuxième mode de réalisation illustré à la figure 3, sur lequel les références des éléments communs avec le mode de réalisation précédent sont augmentées d'une centaine le module de commande 130 est entouré par des pointillés, et est ici réparti entre le boîtier d'alimentation 1 et l'EMAC 2.

Le module de commande 130 comporte un étage numérique 131 qui comporte des moyens de connexion 132 aux bus numériques 106 amenant les consignes numériques de freinage élaborées par les calculateurs de freinage 105, ainsi qu'une unité de traitement numérique 133 (par exemple un processeur ou CPU associé à des mémoires) mettant en oeuvre des lois complexes pour élaborer une première commande de freinage 134.

Le module de commande 130 comporte en outre un étage analogique 135, avec une première carte 135a disposée dans le boîtier d'alimentation 101 qui comporte des moyens d'entrée sortie 136 pour recevoir des signaux analogiques ou discrets en provenance par exemple des pédales ou du sélecteur de parc. La première carte 135a comporte également au moins un circuit logique programmable 137 pour conditionner lesdits signaux et en déduire une deuxième commande 138 du module de puissance 120 en mettant en oeuvre des lois de freinage simples pouvant être mises en oeuvre à l'aide de portes logiques.

L'étage analogique 135 comporte par ailleurs une deuxième carte 135b qui est disposée dans l'EMAC 2 et qui comporte quant à elle un commutateur 139 recevant la première commande 134 et la deuxième commande 138 et permettant de sélectionner celle des commandes qui sera finalement envoyée au module de puissance 120, en fonction d'un signal 140 externe. Le commutateur 139 est de préférence commandé par le circuit logique programmable 137.

Par ailleurs, la première carte 135a du module analogique 135 comporte un deuxième circuit logique programmable 141 adapté à générer une commande 142 de l'interrupteur de puissance 115, par exemple comme indiqué dans le document FR2857642.

Ainsi, les signaux analogiques de freinage sont acquis au niveau du boîtier d'alimentation, pour commander l'interrupteur de puissance 115 et élaborer la deuxième commande du module de puissance, seule cette dernière étant transmise à l'EMAC 102, ce qui simplifie notablement la structure des 2 boitiers, l'EMAC d'une part qui ne comporte plus qu'essentiellement un coeur numérique avec très peu d'entrées sorties analogiques, et le module d'alimentation d'autre part, qui doit de toute façon acquérir les informations de freinage (pédales et park) telles que réalisées par le module 136 pour déterminer l'état de l'interrupteur de puissance 115, et qui conserve ainsi pratiquement les mêmes entrées sorties sans complexification supplémentaire. Seules quelques logiques additionnelles sont nécessaires pour la génération de la deuxième commande, ces logiques étant implémentées dans le composant programmable 137.

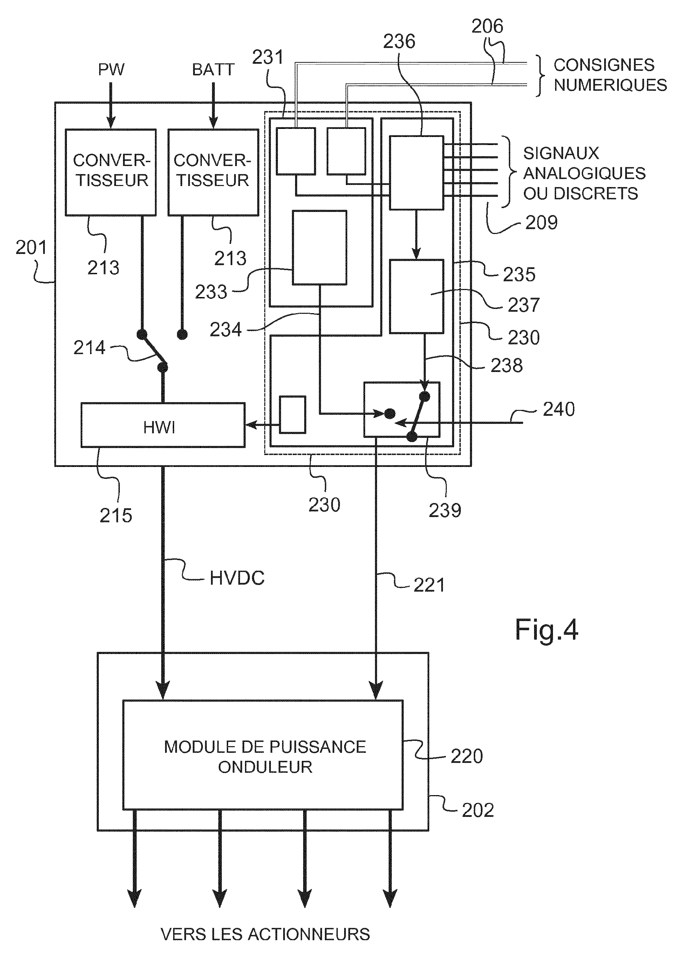

Selon maintenant un troisième mode de réalisation illustré à la figure 4 sur laquelle les références des éléments communs avec ceux illustrés à la figure 3 sont augmentées d'une centaine, le module de commande 230 est maintenant intégralement contenu dans le boîtier d'alimentation.

On retrouve l'étage numérique 231, ainsi que l'étage analogique 235 qui porte des moyens pour commander l'interrupteur de puissance 215. Dans ce mode de réalisation, on constate que la seule entrée/sortie de l'EMAC se résume à la commande de freinage 221 sélectionnée par le commutateur 239, ce qui simplifie considérablement la conception de l'EMAC, sans pour autant complexifier le module d'alimentation outre mesure, sachant que les signaux analogiques et discrets doivent être de toutes les façons acquis pour commander l'interrupteur de puissance 215.

Dans les trois modes de réalisation illustrés, la sélection de la première commande de freinage ou de la deuxième commande de freinage est effectuée à l'aide d'un ordre externe, pouvant provenir par exemple des calculateurs de freinage, ou encore d'un sélecteur manoeuvré manuellement par le pilote de l'aéronef.

L'invention n'est pas limitée à ce qui vient d'être décrit, mais englobe au contraire toute variante entrant dans le cadre défini par les revendications.

## Revendications

1. Système de freinage d'aéronef comportant :
- des freins à actionneurs électromécaniques de freinage (3) adaptés à presser sélectivement des piles de disques associées pour générer un couple de freinage sur des roues associées de l'aéronef,
- au moins un module de commande (30; 130 ; 230) recevant des consignes de freinage et générant en réponse une commande de freinage (21 ; 121 ; 221) ;
- au moins un module de puissance (20 ; 120 ; 220) délivrant en réponse à la commande de freinage des courants de phase aux moteurs des actionneurs connectés au module de puissance pour que ceux-ci développent un effort de freinage correspondant aux consignes de freinage ;
caractérisé **en ce que** le module de commande comporte :
- un étage de traitement numérique (31 ; 131 ; 231) comportant au moins une unité de traitement numérique (33 ;133 ;233) pour mettre en oeuvre des lois complexes de commande des actionneurs pour générer une première commande de freinage en réponse à des consignes numériques de freinage (6 ; 106 ; 206) ;
- un étage de traitement analogique (35 ; 135 ; 235) comportant au moins un circuit logique programmable (37 ; 137 ; 237) pour au moins :
• conditionner les consignes numériques de freinage provenant d'au moins un bus de communication numérique pour les envoyer à l'étage de traitement numérique afin que celui-ci génère la première commande de freinage ;
• recevoir et conditionner des consignes analogiques ou discrètes (9 ; 109 ; 209) de freinage, et en déduire une deuxième commande de freinage (38 ; 138 ; 238) en mettant en oeuvre des lois simples de commande des actionneurs ;
• sélectionner l'une des première ou deuxième commandes de freinage en réponse à un ordre de sélection externe pour l'envoyer au module de puissance.

2. Système de freinage selon la revendication 1, dans lequel le module de commande (30) est intégralement contenu avec le module de puissance (20) dans un contrôleur ou EMAC (02) distinct d'un boîtier d'alimentation (01) en forte puissance du module de puissance du contrôleur.

3. Système de freinage selon la revendication 1, dans lequel le module de commande (230) est intégralement contenu dans un boîtier d'alimentation (201) en forte puissance, tandis que le module de puissance est intégralement contenu dans un contrôleur ou EMAC (202) alimenté en forte puissance par le boîtier d'alimentation.

4. Système de freinage selon la revendication 1, dans lequel l'étage analogique (135) du module de commande est partagé entre une première carte (135a) contenue dans le boîtier d'alimentation (120) et une deuxième carte (135b) contenue avec le module de puissance dans un contrôleur ou EMAC (102) qui est alimenté en forte puissance par un boîtier d'alimentation (120) qui contient l'étage numérique (131) du module de commande.

## Patentansprüche

1. Bremssystem für ein Flugzeug, umfassend:
- Bremsen mit elektromechanischen Bremsaktoren (3), die dazu geeignet sind, dazugehörige Stapel von Scheiben selektiv zu drücken, um an dazugehörigen Rädern des Flugzeugs ein Bremsmoment zu erzeugen,
- mindestens ein Steuermodul (30; 130; 230), das Bremssollwerte empfängt und in Antwort einen Bremsbefehl (21; 121; 221) erzeugt,
- mindestens ein Leistungsmodul (20; 120; 220), das in Antwort auf den Bremsbefehl Phasenströme an die Motoren der mit dem Leistungsmodul verbundenen Aktoren liefert, damit diese eine den Bremssollwerten entsprechende Bremskraft entwickeln,
**dadurch gekennzeichnet, dass** das Steuermodul umfasst:
- eine digitale Verarbeitungsstufe (31; 131; 231), die mindestens eine digitale Verarbeitungseinheit (33; 133; 233) umfasst, um komplexe Steuerungsgesetze zur Steuerung der Aktoren anzuwenden, um einen ersten Bremsbefehl in Antwort auf digitale Bremssollwerte (6; 106; 206) zu erzeugen,
- eine analoge Verarbeitungsstufe (35; 135; 235), die mindestens eine programmierbare logische Schaltung (37; 137; 237) umfasst, um zumindest:
• die digitalen Bremssollwerte, die aus mindestens einem digitalen Kommunikationsbus stammen, zu konditionieren, um sie zur digitalen Verarbeitungsstufe zu senden, damit diese den ersten Bremsbefehl erzeugt,
• analoge oder diskrete Bremssollwerte (9; 109; 209) zu empfangen und zu konditionieren, und daraus einen zweiten Bremsbefehl (38; 138; 238) abzuleiten, indem einfache Steuerungsgesetze zur Steuerung der Aktoren angewandt werden,
• einen ersten oder zweiten Bremsbefehl in Antwort auf einen externen Auswahlbefehl auszuwählen, um ihn an das Leistungsmodul zu senden.

2. Bremssystem nach Anspruch 1, wobei das Steuermodul (30) mit dem Leistungsmodul (20) integral in einem Kontrollgerät oder EMAC (02) enthalten ist, das von einem Versorgungsgehäuse (01) mit hoher Leistung zur Versorgung des Leistungsmoduls des Kontrollgeräts getrennt ist.

3. Bremssystem nach Anspruch 1, wobei das Steuermodul (230) integral in einem Versorgungsgehäuse (201) mit hoher Leistung enthalten ist, während das Leistungsmodul integral in einem Kontrollgerät oder EMAC (202) enthalten ist, das von dem Versorgungsgehäuse mit hoher Leistung versorgt wird.

4. Bremssystem nach Anspruch 1, wobei die analoge Stufe (135) des Steuermoduls zwischen einer ersten Karte (135a), die in dem Versorgungsgehäuse (120) enthalten ist, und einer zweiten Karte (135b) aufgeteilt ist, die mit dem Leistungsmodul in einem Kontrollgerät oder EMAC (102) enthalten ist, das von einem Versorgungsgehäuse (120), das die digitale Stufe (131) des Steuermoduls enthält, mit hoher Leistung versorgt wird.

## Claims

1. An aircraft braking system comprising:
· brakes with electromechanical braking actuators (3) adapted to press selectively against associated stacks of disks in order to generate a braking torque on associated wheels of the aircraft;
· at least one control module (30; 130; 230) receiving braking setpoints and responding by generating a braking command (21; 121; 221); and
· at least one power module (20; 120; 220) responding to the braking command by delivering AC power to the motors of actuators connected to the power module so that they develop braking forces corresponding to the braking setpoints;
the system being **characterized in that** the control module comprises:
. a digital processor stage (21; 131; 231) comprising at least one digital processor unit (33; 133; 233) for implementing complex relationships for controlling the actuators to generate a first braking command in response to digital braking signals (6; 106; 206); and
· an analog processor stage (35; 135; 235) comprising at least one programmable logic circuit (37; 137; 237) for at least:
· conditioning the digital braking setpoints coming from at least one digital communications bus in order to send them to the digital processor stage so that it generates the first braking command;
. receiving and conditioning analog or discrete braking setpoints (9; 109; 209), and deducing therefrom a second braking command (38; 138; 238) by implementing simple relationships for controlling the actuators; and
· selecting one of the first and second braking commands in response to an external selection order in order to send the selected command to the power module.

2. A braking system according to claim 1, wherein the control module (30) is fully contained with the power module (20) in a controller or EMAC (2) distinct from a high power power supply unit (1) of the power module of the controller.

3. A braking system according to claim 1, wherein the control module (230) is fully contained in a high-power power supply unit (201), while the power module is fully contained in a controller or EMAC (202) supplied with high power by the power supply unit.

4. A braking system according to claim 1, wherein the analog stage (135) of the control module is shared between a first card (135a) contained in the power supply unit (120) and a second card (135b) contained in the power module in a controller or EMAC (102) that is supplied with high power by a power supply unit (120) that contains the digital stage (131) of the control module.
